Europäisches Patentamt

European Patent Office

Office européen des brevets

(11) Publication number: **0 209 206 B1**

# EUROPEAN PATENT SPECIFICATION

(45) Date of publication of patent specification: **02.09.92**  (51) Int. Cl.⁵: **A01J 7/00, A01K 1/12**

(21) Application number: **86201255.6**

(22) Date of filing: **17.07.86**

(54) **A milking implement.**

(30) Priority: **19.07.85 NL 8502084**

(43) Date of publication of application:
**21.01.87 Bulletin 87/04**

(45) Publication of the grant of the patent:
**02.09.92 Bulletin 92/36**

(84) Designated Contracting States:
**DE FR GB NL SE**

(56) References cited:
**WO-A-85/02973         DD-A- 82 592
DE-A- 2 812 027         FR-A- 2 220 182
GB-A- 496 767           GB-A- 918 766**

(73) Proprietor: **C. van der Lely N.V.
Weverskade 10 P.O. Box 26
NL-3155 ZG Maasland(NL)**

(72) Inventor: **van der Lely, Cornelis
7, Brüschenrain
Zug(CH)**

(74) Representative: **Mulder, Herman et al
Octrooibureau Van der Lely N.V. Weverskade
10 P.O. Box 26
NL-3155 ZG Maasland(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

The invention relates to a milking implement provided with at least one teat cup, which can be attached to a teat of the udder of an animal, said teat cup comprising a space to accommodate the teat. In such a milking implement, which is well known e.g. from GB-A-918,766, the milk is sucked from the teat, a massaging action being exerted on the teat through the supply of a varying pressure. Said varying pressure is brought about in a space between the exterior wall of the teat cup and a flexible teat holder constituting the interior lining of the teat cup.

The invention envisages a milking implement which makes it possible to perform the milking in a reliable and efficient manner.

For this purpose means are provided, according to the invention, for bringing about a varying sequence of an under pressure and an over pressure within the space to accommodate the teat. Consequently, there is no need to install separate pulsation conduits. The varying sequence of the under pressure and the over pressure within the space to accommodate the teat, also leads to a relative movement of the teat and the teat cup. This relative movement of the teat and teat cup brings about a massage of the teat, which has a positive influence on the milking process. The space between the exterior wall of the teat cup and a flexible teat holder, present in the teat cup, may comprise an outward air passage, although it is also possible to have this space function as a resilient air cushion. From GB-A-496,767 it is known to subject the teats in a cup to the influence of an intermitted vacuum and an intermitted pressure. The vacuum and pressure on the teats occur simultaneously. To this end in the chamber of the teat cup there is provided an elastic central body, which extends upwardly unto between the teats, on a level with the root of the teat. When a vacuum is brought about in the chamber of the teat cup, the elastic body, which by means of a tube is connected to the atmosphere, tends to widen so as to cause it to exert a pressure on the teats in the direction towards the periphery of the udder cup.

According to a further aspect of the invention, the teat holder, contained within the teat cup and constituting the space to accommodate the teat, may be provided on its interior side with one or more upwardly merging lamellae. Because of this arrangement a proper contact between the teat holder and the teat is obtained, eliminating the risk of air being sucked on along the teat during sucking. However, provided a sufficient over pressure prevails in the milk conduit, air may escape in an upward direction between the teat and the lamellae.

According to a further aspect of the invention, means may be available for carrying out an upward and downward movement of the teat cup in respect of the teat. Said upward and downward movement may be conducive to the massaging effect on the teat, it being possible to bring about such a movement by supplying, in a varying sequence, an over pressure and an under pressure towards the teat cup.

According to a further aspect of the invention, the teat cup is provided with a bottom being so compliant near its centre that it cannot shut off the locking hole of the teat. To that effect the exterior wall of the teat cup is preferably provided with a local embossment device, so that the pressurized teat holder may be moved in said embossment device.

The milking implement may be designed, according to a further aspect of the invention, in such a manner that four mutually aligned teat cups are provided and that diagonally arranged teat cups are subjected simultaneously to an under pressure, respectively to an over pressure. Thus, a favourable distribution of force among the associated teat cups and the udder is obtained.

According to a further aspect of the invention, the aligned arrangement of the teat cups may be adjustable by means of mutually pivotable arms. The teat cups may be connected to a central portion which can be attached to the animal by means of a carrying member, such as a carrying strap, which carrying member may stay the teat cups against the downwardly exerted force, resulting from the introduction of an exceed pressure into the teat cup.

The animals should preferably occupy a site in the parlour throughout the year with the udders of the animals remaining uninterruptedly attached to the milking implement. In this way a milking implement may operate continuously, the frequency of milking the animal in a 24 hours' period depending on the number of milking implements and on the number of animals. Thus, the economical output of the milking implement is increased. Furthermore, the production of milk is stepped up by the high frequency of milking; the animals may be milked six to twelve times per 24 hours' period.

During the intervals between milking the part of the milking implement that is not used for milking should be utilized for supplying a liquid to the teats of the udder. This liquid may contain a cleaning agent. Further, the part of the milking implement that is not used for milking may also be utilized for supplying air to the teats of the animal. The liquid may be circulated and the air may escape near the teats. The supply of liquid and air may also exert a massaging effect, stimulating the blood circulation in the teats.

In order to further hygiene and for the sake of the animal's health, the floor of the place of residence of an animal may be of an at least partially movable construction. The animal is allowed in such an arrangement to perform movements, while remaining connected to the milking implement.

If the floor comprises a chain conveyor which can be driven by a motor in a rearward direction, the animal is obliged to move forwardly at a certain speed with regard to the floor. Dust and contaminating substances are then transported by the conveyor at the same time, so that a fresh and clean place of residence is created for the animal.

The installation should comprise control members which are controlled by a computer, so that there is an automatic sequence in the milking of the animals, the movements of the animals, the cleaning of the places of residence and the feeding of the animals.

For a better understanding of the invention, some embodiments of an installation for milking animals will be given, reference being made to the accompanying drawings, in which:

Figure 1 is a schematic plan view of a parlour;

Figure 2 is a lateral view of a milking site with a cow occupying said place, according to the arrows II in Figure 1;

Figure 3 is a partly rear view of a cow in a milking site according to the arrow III in Figure 2;

Figure 4 is a further detailed lateral view according to a part of Figure 2;

Figure 5 is a schematic cross-section of a milking cluster connected to an udder;

Figure 6 is a bottom view of the milking cluster according to Figure 5 and

Figure 7 is a cross-section of a teat cup.

In the various figures, which are only schematic renderings, corresponding components carry similar reference numerals.

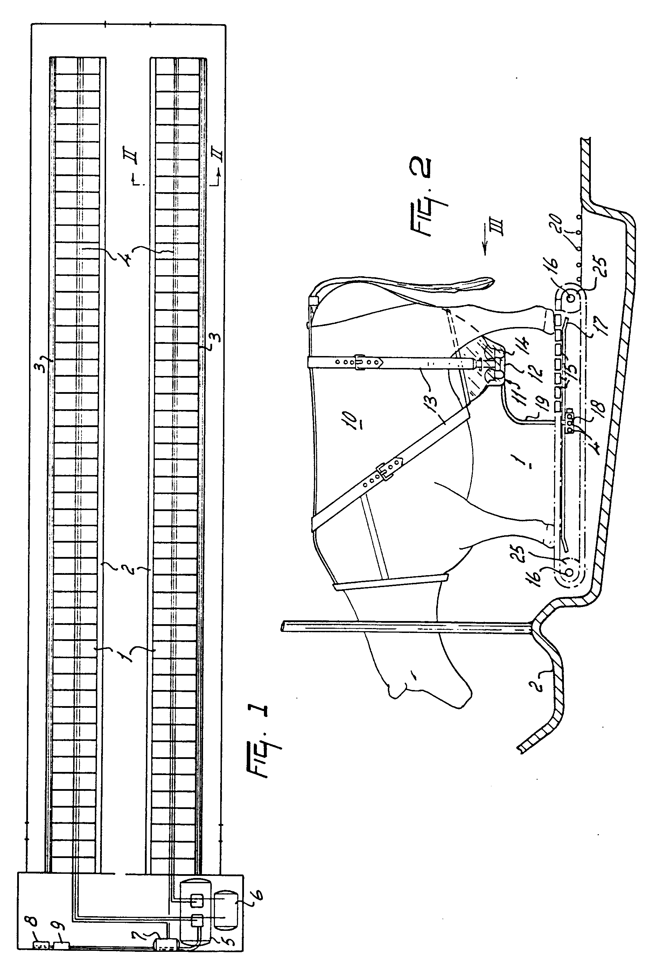

Figure 1 shows a plan view of a parlour which comprises two rows of milking sites 1. The milking sites are provided with a feeding gutter 2 at the front and with a conveyor 3 for discharging manure at the back. In the longitudinal direction of each row of milking sites 1, a set of conduits 4 is arranged underneath the above-mentioned milking sites, said conduits being designed in such a way that an attachment to conduits 4 can be brought about in each milking site. The conduits 4 comprise one or more liquid and/or air pipes. Furthermore, a schematic rendering of a milk tank 5 is given, which also goes for a tank 6 for water, rinsing liquid or cleansing liquid. A tank 7 for compressed air is also rendered. A pump, if at all provided, for bringing about a vacuum or under pressure, is not further detailed. The installation may further comprise a computer 8 and control means 9 for an automatic control, check and/or protection of the installation.

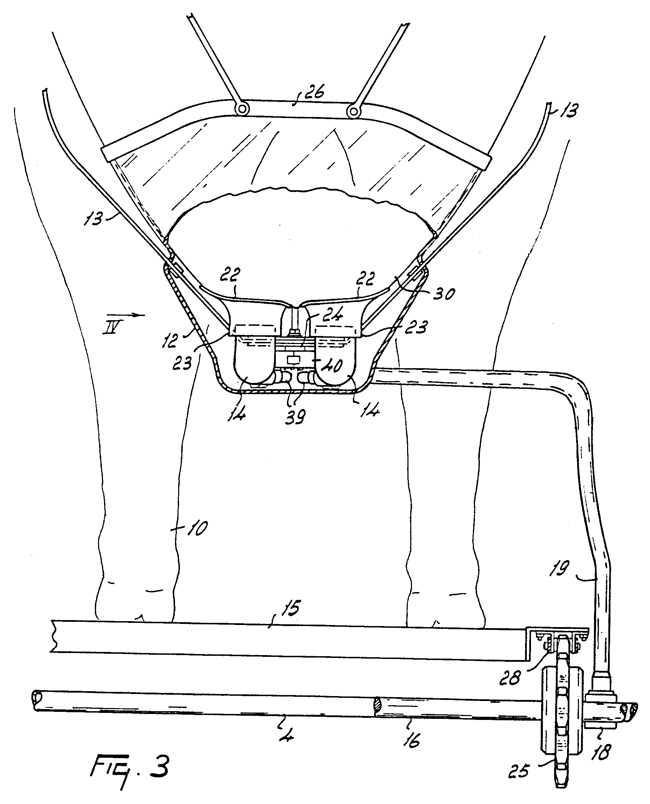

Figure 2 shows a cow 10, occupying a milking site. Said cow 10 is provided with a milking cluster 11, which may be permanently connected to the udder of the cow. The milking cluster 11 comprises an envelope 12, made of a transparent synthetic material and attached to the cow by means of straps 13. Contained within the envelope 12 are the teat cups 14, which will be further explained.

The floor of the milking parlour consists of a conveyor with mutually coupled, movable elements 15, linked to one another in the shape of an endless conveyor. The conveyor is provided with two final guiding members 16, about which the elements 15 can move, and with a support 17 to stay the elements 15, constituting the floor of the milking site 1.

The conveyor as described before having been actuated, the elements 15 which constitute the floor of the milking site can move in a rearward direction with regard to the cow, so that the cow is compelled to start walking and defilements, possibly present on the floor, can be discharged in a rearward direction. Near the floor of the milking site connections 18 are provided, through which connections an under pressure, cleansing or rinsing liquid and/or pre-heated air can be supplied and milk, and possibly other liquids, discharged. (The term "under pression" or "vacuum" means an air pressure lower than the atmospheric pressure; the term "over pressure" or "exceed pressure" is used for a pressure higher than the atmospheric pressure). For that purpose the necessary conduits 19 are led from the milking cluster 11 to the connections 18.

Behind the milking site 1 a grating 20 is rendered, allowing the manure and other defilements, if any, to fall through, then to be transported by discharge means, which are not rendered in Figure 2.

Figure 3 shows a cross-section of the transparent envelope 12, containing four teat cups 14, of which two are visible. The teat cups are provided with a connection, directed forwardly, in view of the necessary conduits. The upper rim 22 of the teat cup is adapted to the shape of the udder, so that a proper attachment to the udder can be obtained. The upper rim 22 is set in the flexible upper part 23 of the teat cup. The straps 13, ensuring the attachment of the milking cluster to the cow, carry both the envelope 12 and a central portion 24, to which the teat cups 14 are connected. Through a flexible conduit 19, containing various pipes, the teat cups are linked with the connections 18 near the floor of the milking site. The floor of the milking site consists of elements 15, mutually connected and guided around the chain wheels 25, as an endless conveyor. One or more of the chain wheels 25 may be driven by means which are not further defined, such as an electric motor.

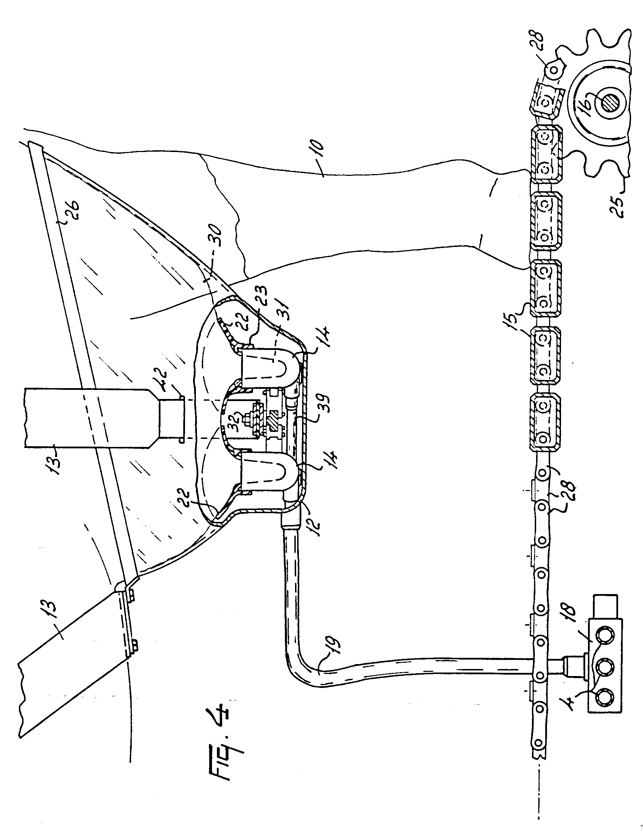

Figure 4 shows, in a way similar to that of Figure 3, the milking cluster in a lateral view. The envelope 12 is provided with a flexible upper rim 26, making it possible to obtain a proper attachment to the udder of the cow. A cross-section is given of the elements 15, constituting the floor, said elements consisting of e.g. steel beams with a closed profile and being mutually linked up by means of shackles 28, constituting a chain which engages with the chain wheels 25.

Figure 5 shows in more detail the embodiment of the milking cluster. It comprises a schematic rendering of the udder 30 with the teats 31 of the cow. The udder 30 is encompassed by the transparent envelope 12 which is attached to the cow by means of a strap 13. Contained within the envelope 12 is a central portion 24, which is also connected to strap 13 by means of a bolt 32. Attached to the central portion 24 are the four teat cups 14, a cross-section of two such cups being provided in Figure 5. The teat cups 14 are provided on the upper side with a flexible top part 23, which may have such a shape that the required attachment to the udder can be obtained. Although the upper part 23 may, because of its flexibility, adapt itself to the shape of the udder, it may be desirable to pre-shape said upper part in such a manner, that a shape is obtained which matches the average size of an udder. In that case the upper part 23 will not have a symmetric shape.

The teat cups 14, rendered in Figure 5, are relatively short, i.e. they have a comparatively small size in height and, accordingly, the teat 31 will extend to the vicinity of the teat cup's lowermost side. Within the teat cup, the teat holder 33 is provided, said holder being integrally connected with the flexible upper part 23 and encompassing the teat when the latter is present in the teat cup. Around the teat holder 33 a chamber 34 is provided, which may function as a resilient air cushion or be provided with a breather opening so that an atmospheric air pressure is maintained in the chamber 34. Through the milk hose 39 an under pressure and an exceed pressure are supplied in a varying sequence. When an under pressure prevails, milk is being sucked from the teat, while there is a massage of the teat when an exceed pressure prevails, in which process air may escape along the teat. Provided in the teat holder 33 are sensors 37, which can detect if the teats occupy a correct position in the teat cup. The sensors 37 are connected by means of electrical conduits 38 to a control unit which is not shown in Figure 5. In order to avoid that, at times when an under pressure prevails, the locking hole of the teat is shut off because it settles against the lowermost side of the teat holder, the teat cup 14 is provided with an embossment device 41, keeping the teat cup from shutting off the locking hole.

The milk hoses 39, shown in Figure 5, ensure the discharge of milk and are mounted in a lateral position with regard to the teat cups 14 in such a manner that the total height of the teat cup scarcely exceeds the length of the teat 31. Thus, a compact teat cup can be obtained, its height being less than twice the diameter. Generally speaking, an advantage of such a teat cup is that the parts of the milking cluster do not project downwardly farther than necessary, which reduces the risk of the animal kicking the milking cluster down.

As is evident from Figure 5, the strap 13, to which the central portion 24 is connected by means of bolt 32 through a slotted hole 42, traverses the transparent envelope 12, so that both said envelope 12 and the milking cluster are supported.

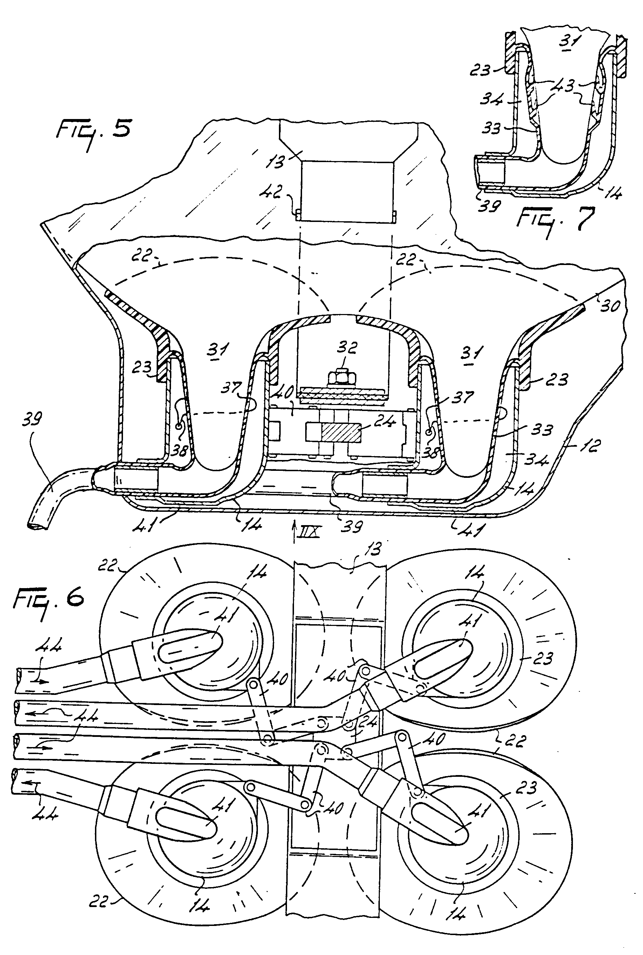

Figure 6 is a schematic bottom view of the milking cluster, shown in Figure 5. Figure 6 renders four milk hoses 39, each of which leads to a teat cup 14. The teat cups 14 are connected, by means of mutually pivotable arms 40, to the central portion that is attached to the strap 13. Accordingly, the teat cups are allowed to move in respect of one another in a substantially level plane, enabled to do so also because the hoses 39 are sufficiently flexible for that purpose. Therefore, the milking cluster can adapt itself to the position of the teats, which position may vary according to the state or condition of the udder.

From Figure 6 it is clear that the embossment devices 41 at the lowermost sides of the teat cups 14 have a slightly protracted shape. It is preferable that the low and high pressure in the various teat cups should be brought about in such a way, that two teat cups, situated diagonally in respect of one another, are subjected simultaneously to a low, respectively to a high pressure, as indicated by the arrows 44. A certain upward movement of the milking cluster may result from the varied suction, which may have a positive influence on the milking process.

Figure 7 shows a teat cup which is provided with a teat holder 33 with substantially annular, upwardly directed lamellae 43. These lamellae may lean against the teat and prevent air from being sucked on along the teat in those periods when an under pressure prevails in the milk hose. Air or liquid is allowed to escape along the teat, however, if a sufficient exceed pressure is brought about in the milk hose, e.g. during cleansing or drying of the teat.

**Claims**

1. A milking implement, provided with at least one teat cup (14) which can be attached to a teat (31) of the udder of an animal, said teat cup (14) comprising a space to accommodate the teat, characterized by means for bringing about a varying sequence of an under pressure and an over pressure within the space to accommodate the teat (31).

2. A milking implement as claimed in claim 1, characterized in that the teat cup (14) comprises a flexible teat holder (33), whereby the space between the exterior wall of the teat cup (14) and the flexible teat holder (33) comprises an outward air passage.

3. A milking implement as claimed in claim 1 or 2, characterized in that the teat holder (33) contained within the teat cup (14) and constituting the space to accommodate the teat (31) is provided on the interior side with one or more upwardly directed lamellae (43).

4. A milking implement as claimed in any one of the preceding claims, characterized by means for carrying out an upward and downward movement of the teat cup (14) in respect of the teat (31).

5. A milking implement as claimed in claim 4, characterized in that the upward and downward movement is brought about by the supply to the teat cup (14) of an exceed pressure and an under pressure in a varying sequence.

6. A milking implement as claimed in any one of the preceding claims, characterized in that the teat cup (14) is provided with a bottom being so compliant near its centre that the hole of the teat cannot be shut off.

7. A milking implement as claimed in claim 6, characterized in that the bottom of the teat cup (14) is provided with a local embossment device (41).

8. A milking implement as claimed in claim 7, characterized in that the teat holder (33) can be moved in the local embossment device (41).

9. A milking implement as claimed in any one of the preceding claims, characterized in that four mutually aligned teat cups (14) are provided, and that teat cups (14), arranged diagonally in respect of one another, are subjected simultaneously to an under pressure, respectively to an exceed pressure.

10. A milking implement as claimed in claim 9, characterized in that the aligned arrangement of teat cups (14) is adjustable by means of mutually pivotable arms (40).

11. A milking implement as claimed in claim 10, characterized in that the teat cups (14) are connected to a central portion (24), which can be attached to the animal by means of a carrying member (13), such as a carrying strap, which carrying member (13) stays the teat cups (14) against the downwardly exerted force, resulting from the introduction of an exceed pressure into the teat cup (14).

12. A milking implement as claimed in any one of the preceding claims, characterized by means (12, 13) for continuous attachment of the teat cups (14) to the teat of the udder of the animal.

**Patentansprüche**

1. Melkvorrichtung mit mindestens einem Zitzenbecher (14), der an einer Zitze (31) des Euters eines Tieres anzubringen ist und einen Zwischenraum zur Anpassung an die Zitze aufweist,
gekennzeichnet durch eine Einrichtung zum Aufbringen eines Unterdruckes und eines Überdruckes in dem Zwischenraum in veränderbarer Reihenfolge zwecks Anpassung an die Zitze (31).

2. Melkvorrichtung nach Anspruch 1,
dadurch gekennzeichnet, daß der Zitzenbecher (14) einen flexiblen Zitzenhalter (33) aufweist, und daß der Zwischenraum zwischen der Außenwand des Zitzenbechers (14) und dem flexiblen Zitzenhalter (33) einen Luftauslaß aufweist.

3. Melkvorrichtung nach Anspruch 1 oder 2,
dadurch gekennzeichnet, daß der innerhalb des Zitzenbechers (14) befindliche Zitzenhalter (33), der den Zwischenraum zur Anpassung an die Zitze (31) bildet, an seiner Innenseite mit einer oder mehreren aufwärts gerichteten Lamellen (43) versehen ist.

4. Melkvorrichtung nach einem der vorhergehenden Ansprüche,
gekennzeichnet durch eine Einrichtung zur Erzeugung einer aufwärts und abwärts gerichteten Bewegung des Zitzenbechers (14) relativ zu der Zitze (31).

5. Melkvorrichtung nach Anspruch 4,

dadurch gekennzeichnet, daß die aufwärts und abwärts gerichtete Bewegung durch Versorgung des Zitzenbechers (14) mit Überdruck und Unterdruck in veränderbarer Reihenfolge erzeugt wird.

6. Melkvorrichtung nach einem der vorhergehenden Ansprüche,
dadurch gekennzeichnet, daß der Zitzenbecher (14) mit einem Boden versehen ist, der derart nachgiebig nahe seines Zentrums ausgebildet ist, daß die Öffnung der Zitze nicht verschlossen werden kann.

7. Melkvorrichtung nach Anspruch 6,
dadurch gekennzeichnet, daß der Zitzenbecher (14) mit einem örtlichen Wulst (41) versehen ist.

8. Melkvorrichtung nach Anspruch 7,
dadurch gekennzeichnet, daß der Halter (33) in dem örtlichen Wulst (41) bewegbar ist.

9. Melkvorrichtung nach einem der vorhergehenden Ansprüche,
dadurch gekennzeichnet, daß vier zueinander ausgerichtete Zitzenbecher (14) vorgesehen sind, und daß diagonal zueinander angeordnete Zitzenbecher (14) gleichzeitig unter Unterdruck bzw. Überdruck gesetzt werden.

10. Melkvorrichtung nach Anspruch 9,
dadurch gekennzeichnet, daß die Ausrichtung der Zitzenbecher (14) zueinander durch gegeneinander schwenkbare Arme (40) einstellbar ist.

11. Melkvorrichtung nach Anspruch 10,
dadurch gekennzeichnet, daß die Zitzenbecher (14) mit einem zentralen Teil (24) verbunden sind, das an dem Tier mittels eines Traggliedes (13) wie einem Tragstreifen anzubringen ist, und daß das Tragglied (13) die Zitzenbecher (14) gegen die abwärts gerichtete Kraft abstützt, die aus dem Zuführen eines Überdruckes in den Zitzenbecher (14) resultiert.

12. Melkvorrichtung nach einem der vorhergehenden Ansprüche,
gekennzeichnet durch eine Einrichtung (12, 13) zum stetigen Anlegen der Zitzenbecher (14) an die Zitzen des Tiereuters.

**Revendications**

1. Machine à traire pourvue d'au moins un godet de trayon (14) pouvant être attaché à un trayon (31) du pis d'un animal, ledit godet de trayon (14) comprenant un espace pour recevoir le trayon, **caractérisée** par des moyens pour provoquer une séquence variable d'une dépression et d'une surpression dans l'espace destiné à recevoir le trayon (31).

2. Machine à traire selon la revendication 1, caractérisée en ce que le godet de trayon (14) comprend un support souple (33) de trayon, dans laquelle l'espace entre la paroi extérieure du godet de trayon (14) et le support souple (33) de trayon comprend un passage d'air vers l'extérieur.

3. Machine à traire selon la revendication 1, caractérisée en ce que le support de trayon (33) contenu dans le godet de trayon (14) et constituant l'espace pour recevoir le trayon (31) est muni sur le côté intérieur d'une ou plusieurs lamelles (43) dirigées vers le haut.

4. Machine à traire selon l'une quelconque des revendications précédentes, caractérisée par des moyens pour réaliser un mouvement de montée et de descente du godet de trayon (14) par rapport au trayon (31).

5. Machine à traire selon la revendication 4, caractérisée en ce que le mouvement de montée et de descente est provoqué par la fourniture au godet de trayon (14) d'une surpression et d'une dépression en une séquence variable.

6. Machine à traire selon l'une quelconque des revendications précédentes, caractérisée en ce que le godet de trayon (14) est muni d'un fond suffisamment souple près de son centre pour que le trou du trayon ne puisse pas être obturé.

7. Machine à traire selon la revendication 6, caractérisée en ce que le fond du godet de trayon (14) est muni d'un dispositif local de bossage (41).

8. Machine à traire selon la revendication 7, caractérisée en ce que le support de trayon (33) peut être mis en mouvement dans le dispositif local de bossage (41).

9. Machine à traire selon l'une quelconque des revendications précédentes, caractérisée en ce que sont prévus quatre godets de trayons (14) alignés mutuellement et en ce que des godets de trayons (14) disposés en diagonale, l'un par rapport à l'autre, sont respectivement soumis simultanément à une dépression et à une surpression.

**10.** Machine à traire selon la revendication 9, caractérisée en ce que la disposition alignée des godets de trayons (14) est réglable au moyen de bras (40) mutuellement pivotants.

**11.** Machine à traire selon la revendication 10, caractérisée en ce que les godets de trayons (14) sont reliés à une partie centrale (24) pouvant être attachée à l'animal au moyen d'un organe porteur (13) tel qu'une sangle porteuse, lequel organe porteur (13) soutient les godets de trayons (14) contre la force exercée vers le bas, résultant de l'introduction d'une surpression dans les godets de trayons (14).

**12.** Machine à traire selon l'une quelconque des revendications précédentes, caractérisée par des moyens (12, 13) pour l'attachement continu des godets de trayons (14)au trayon du pis d'un animal.

FIG. 1

FIG. 2

EP 0 209 206 B1

FIG. 3

FIG. 4

FIG. 5

FIG. 6

FIG. 7